# EUROPEAN PATENT APPLICATION

(11) **EP 2 684 763 A1**
(43) Date of publication of application: **15.01.2014**
(21) Application number: 12176292.6
(22) Date of filing: 13.07.2012
(51) Int. Cl.: B62B 3/14

(54) **Basket for a supermarket trolley**

(71) Applicant: Rabugino sp. Zo.o., 05.825 Grodzisk Mazowiecki (PL)
(72) Inventor: Muscara', Maurizio, 00199 Roma (IT)
(74) Representative: Buzzi, Franco

(57) **Abstract**

Described herein is a supermarket trolley, comprising a supporting structure (1) provided with wheels (2) and a basket container (4) fixed to the supporting structure (1), wherein the basket container (4) is made of moulded plastic material and is formed with through openings (5) configured in such a way as to enhance off-flow of a washing liquid for periodic cleaning of the basket container (4).

## Description

### Field of the invention

The present invention relates to supermarket trolleys, of the type comprising a supporting structure provided with wheels and a basket container fixed to the supporting structure.

### Prior art

Traditionally, supermarket trolleys have an entirely metal structure: the walls of the basket container are in this case formed by a metal-wire grill.

More recently, trolleys have been proposed that have a structure substantially entirely made of plastic material, which, in addition to presenting advantages in terms of lightness and hence greater manoeuvrability for users, are also suitable for use with automatic scanning equipment such as barcode readers for reading the barcodes of the goods put into the basket container. Examples of such trolleys are disclosed in EP-A-0222480, US-A-2003/0057666 and US-A-2009/0230643.

However these trolleys made of plastic material present, as compared to metal ones, problems linked to risks of damage and failure of the supporting structure on account of impact, typically when they are replaced after use in the condition where they are slid into a row of other trolleys. Moreover, the trolleys made of plastic material involve problems of hygiene in relation to the need for periodic cleaning by washing of the corresponding basket containers. In fact, whereas baskets with a metal-wire structure can be easily washed in an altogether effective and complete way, the ones made of plastic material, even in the case where they are formed with through openings arranged close to one another, are difficult to wash in a hygienically acceptable way. This is one of the reasons why the diffusion of the trolleys made of plastic material is today limited in so far as they constitute on average a small percentage in relation to all-metal trolleys.

### Summary of the invention

The object of the present invention is to overcome the aforesaid drawbacks and to provide a supermarket trolley having a structure such as to ensure a more massive diffusion thereof on the market, overcoming the drawbacks referred to above of a hygienic nature.

With a view to achieving said object, the subject of the invention is a supermarket trolley of the type defined in the pre-characterizing part of Claim 1, and generally corresponding to US-A-2009/0230643, **characterized in that** said through openings have respective perimetral edges formed like chutes progressively tapered towards the respective end margins thereof in such a way as to enhance off-flow of a washing liquid for periodic cleaning of the basket container.

The perimetral edges of the through openings can diverge at least in part towards the outside of the basket container.

In one embodiment of the invention, the perimetral edges of the through openings are moreover formed with conveying channels at the longitudinally opposite ends of said slots.

The plastic material used for moulding the basket container is conveniently totally or substantially with a base of natural fibres, such as for example polylactic acid (PLA) or wood-plastic composite (WPC), i.e., a mix made of a polymer, such as polypropylene or ABS mixed with wood flour in an amount of around 50%, and may also contain biological fillers.

### Brief description of the drawings

The invention will now be described in detail with reference to the annexed drawings, which are provided purely by way of non-limiting example and in which:
- Figure 1 is a schematic view in side elevation of a supermarket trolley according to the invention;
- Figure 2 shows at a larger scale a detail of the basket container of the trolley of Figure 1;
- Figure 3 is a variant of Figure 2;
- Figure 4 is a schematic perspective view of part of the detail represented in Figure 2;
- Figure 5 is a schematic perspective view of part of the detail represented in Figure 3; and
- Figures 6, 7, 8, 9, 10 are cross-sectional views at a larger scale according to the lines VI-VI, VII-VII, VIII-VIII, IX-IX and X-X, respectively, of Figure 2.

### Detailed description of the invention

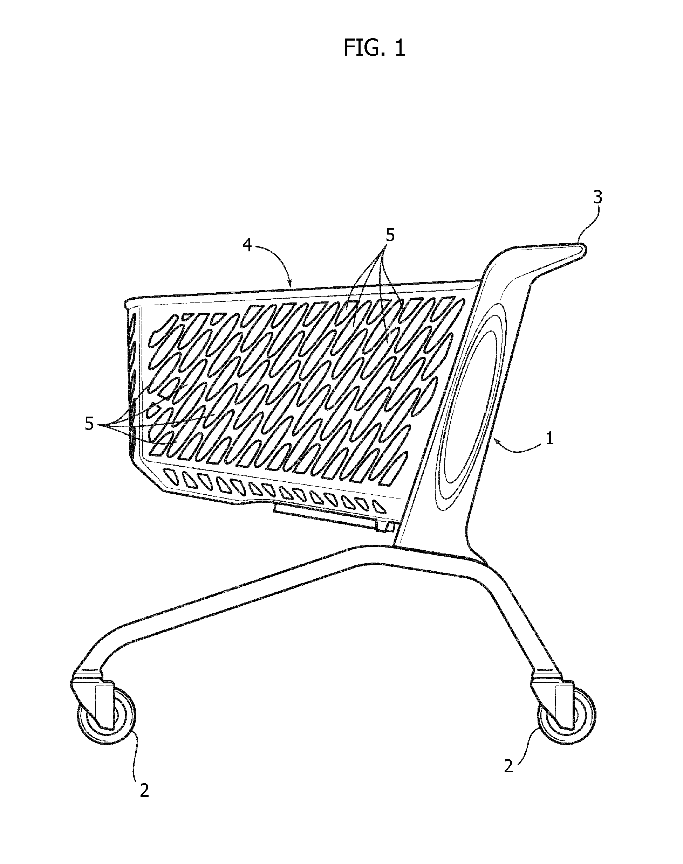

With initial reference to Figure 1, the supermarket trolley according to the invention basically comprises two components: a supporting structure 1 provided at the bottom with wheels 2, which are normally swivel wheels, and at the top with a pushing handle 3, and a basket container 4 fixed in cantilever fashion to the supporting structure 1.

The supporting structure 1 is preferably (albeit not necessarily) made of metal, whilst the basket container 4 is substantially entirely made of moulded plastic material, and more conveniently of a mix of polymers (for example, polypropylene or ABS) and natural fibres, typically wood flour, in an amount generally of around 50%, with possible biological fillers.

The side walls and the bottom wall of the basket container 4 are formed with a plurality of through openings, which, according to another aspect of the invention, consist of oblong slots 5 oriented obliquely and set very close to one another.

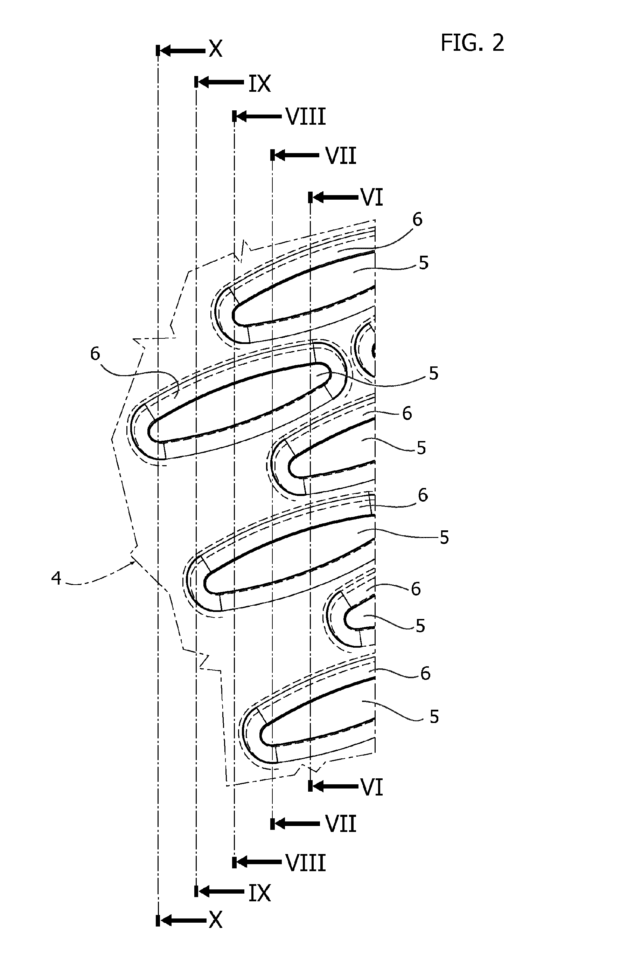

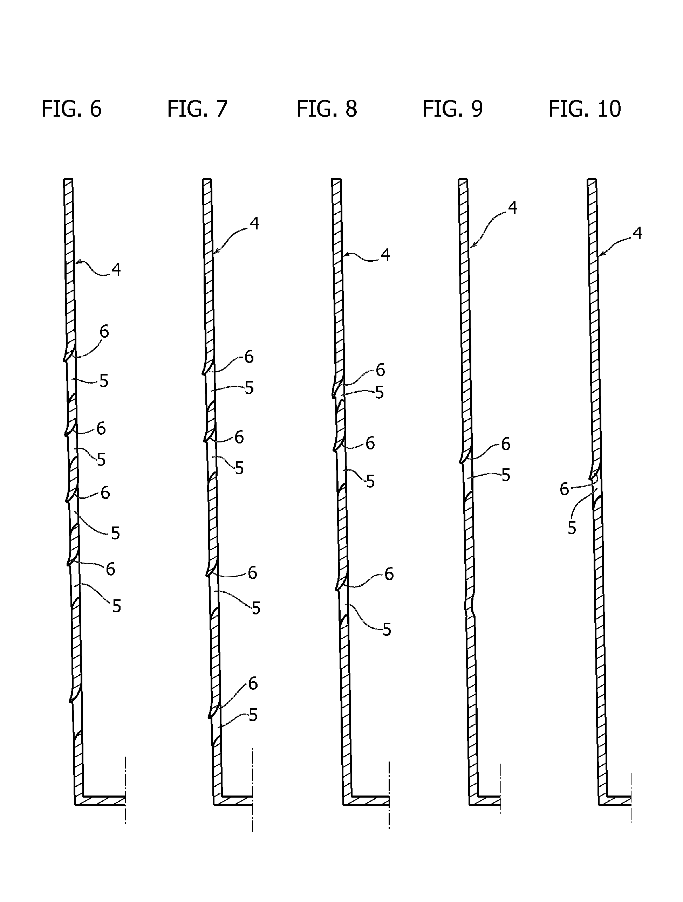

According to the peculiar characteristic of the invention, the slots 5 are configured in such a way as to favour and facilitate off-flow of a washing liquid for periodic cleaning of the basket container 4. More in particular, and as is illustrated in greater detail in Figures 2, 4 and 6 to 10, each slot 5 is delimited by a respective perimetral edge 6 progressively tapered towards the corresponding end margin. Moreover, said edge 6 slightly diverges out of the basket container 4 typically along the top area of the slot 5, in the way also highlighted in Figures 6 to 10, whilst in the bottom part the tapering is more conveniently formed starting from the outer surface of the basket towards the inside of the slot 5.

Thanks to this arrangement, a washing liquid sprayed under pressure against the walls of the basket container 4 is able to remove in an effective and complete way any dirt or impurities that may gather around the slots 5, clearing them out thanks to the off-flow enhanced by the corresponding edges 6.

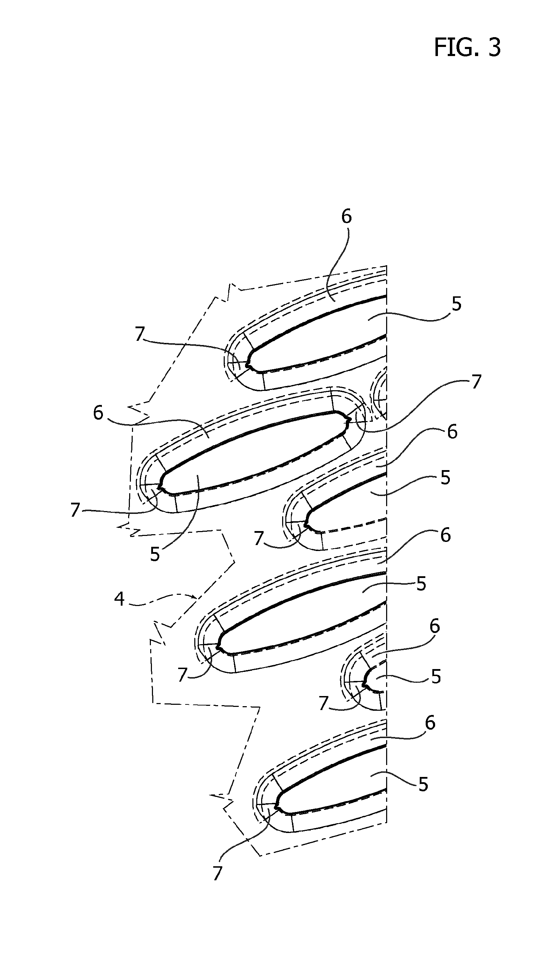

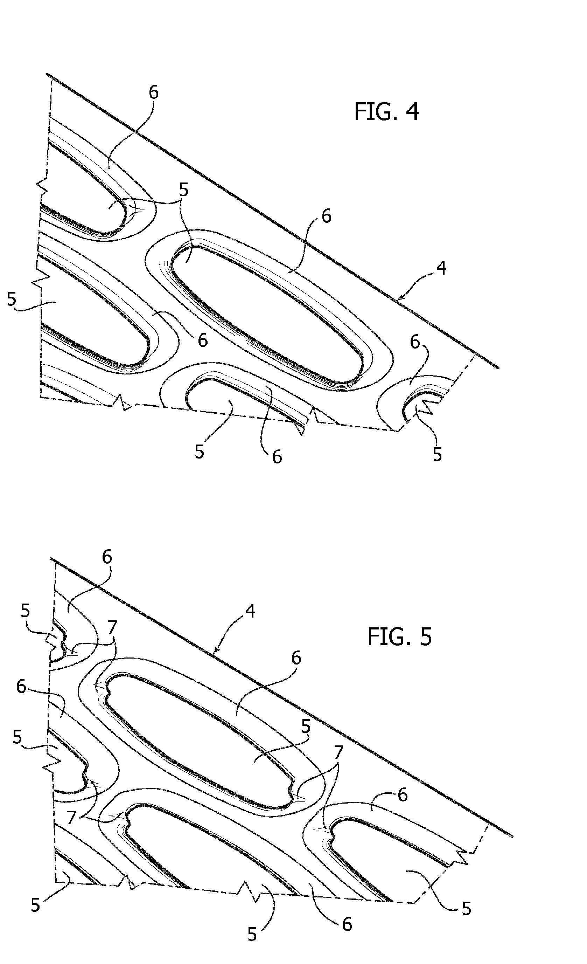

To improve this effect further, the edges 6 of the slotted openings 5 can present the shape represented in Figures 3 and 5, where parts that are identical or similar to the ones already described previously are designated by the same reference numbers. In said variant, the edges 6, in addition to the characteristics already described, are further formed at the longitudinally opposite ends of the slots 5 with respective more inclined impressions 7, resembling channels for conveying the washing water, together with the material removed, towards the inside of the basket container 4.

Of course, the details of construction and the embodiments may vary widely with respect to what has been described and illustrated herein, without thereby departing from the scope of the present invention as defined in the ensuing claims.

## Claims

1. A supermarket trolley, comprising a supporting structure (1) provided with wheels (2) and a basket container (4) fixed to the supporting structure (1), wherein said basket container (4) is made of moulded plastic material and is formed with through openings in the form of oblong slots (5), which are oblique and set close to one another, said supermarket trolley being **characterized in that** said through openings (5) have respective perimetral edges (6) formed like chutes progressively tapered towards the respective end margins thereof in such a way as to enhance off-flow of a washing liquid for periodic cleaning of the basket container (4).

2. The supermarket trolley according to Claim 1, **characterized in that** said perimetral edges (6) diverge at least in part towards the outside of said basket container (4).

3. The supermarket trolley according to Claim 2, **characterized in that** said perimetral edges (6) are moreover formed with conveying channels (7) at the longitudinally opposite ends of said slots (5).

4. The supermarket trolley according to one or more of the preceding claims, **characterized in that** said basket container (4) is made of a plastic material including vegetable fillers.

5. The supermarket trolley according to one or more of the preceding claims, **characterized in that** the supporting structure (1) is made of metal.

6. A container for supermarket trolleys, comprising a basket (4) made of moulded plastic material formed with through openings in the form of oblong slots (5), which are oblique and set close to one another, **characterized in that** said through openings (5) have respective perimetral edges (6) formed like chutes progressively tapered towards the respective end margins thereof.

7. The container according to Claim 6, **characterized in that** said perimetral edges (6) diverge outwards.

8. The container according to Claim 7, **characterized in that** said perimetral edges (6) are moreover formed with conveying channels (7) at the longitudinally opposite ends of said slots (5).

9. The container according to one or more of Claims 6 to 8, **characterized in that** it is made of a plastic material including vegetable fillers.
